# EUROPEAN PATENT APPLICATION

(11) **EP 1 659 742 A1**
(43) Date of publication of application: **24.05.2006**
(21) Application number: 04027516.6
(22) Date of filing: 19.11.2004
(51) Int. Cl.: H04L 12/56

(54) **Method and device for preventing interference of transmission frequency from electronic products**

(71) Applicant: TOPSEED TECHNOLOGY CORP., Chung Ho City, Taipei Hsien, Taiwan (CN)
(72) Inventor: Chi, Chung-Ping, Chung Ho City Taipei Hsien Taiwan (CN)
(74) Representative: Urner, Peter

(57) **Abstract**

A method and a device that prevent interference and overcome the problem of identification between signals simultaneously transmitted from electronic products by providing a learning controller on a receiving unit and a frequency variation generating controller on each electronic product to establish a unit identification frequency for each individual electronic device. The device includes at least one electronic device with a transmitting unit to transmit wireless signals, a receiving unit connected to a computer host for receiving the signals transmitted from the transmitting unit, a learning controller for activating the receiving unit into a learning mode, and a frequency variation generating controller mounted on the electronic device for generating a unit frequency of the electronic device after being activated.

## Description

### BACKGROUND OF THE INVENTION

The present invention relates in general to a method and a device for preventing interference of transmission frequency from electronic products, and more particularly, to a method and a device that prevent interference and overcome the problem of identification between signals simultaneously transmitted from electronic products by providing a learning controller on a receiving unit and a frequency variation generating controller on each electronic product to establish a unit identification frequency for each individual electronic device.

In the application of computers and the peripherals thereof, the limitation of cost and space often results in the connection of a single computer host and electronic input devices such as multiple mouse, keyboards and remote controls. Or for the multimedia function, a mouse, a keyboard and a remote control are often required and connected to the same computer. The conventional signal transmission between the computer host and the electronic input devices is performed by a switch which serves as a signal transmission medium. The hardwire connection has the limitation of the length of cables. Further, when many electronic devices are connected, the cables are easily tangled together to cause difficulty in maintenance. In addition, when the cables are worn off by mouse bite or other external forces, the connection is seriously affected.

The wireless transmission technologies such as radio-frequency (RF) transmission, the WLAN local network operative to perform bi-directional signal transmission for multiple frequency channels and the Bluetooth wireless technique have been applied to electronic products such as mouse, keyboard and remote control. The WLAN local network and Bluetooth wireless techniques both adapt the frequency of 2.4 GHz as the signal transmission frequency standard. The bi-directional operation frequency is often set up between 2420 MHz and 2460 MHz. That is, only 40 MHz operation bandwidth is provided for bi-directional signal transmission. Therefore, it is easy to cause interference between signals, such that the computer cannot properly receive the input signal or correctly determine the signal source.

### BRIEF SUMMARY OF THE INVENTION

To resolve the above drawbacks, a method and a device for preventing interference of transmission frequency from electronic input devices is provided.

Accordingly, the device for preventing interference of transmission frequency from electronic input devices includes at least one electronic device with a transmitting unit to transmit wireless signals, a receiving unit connected to a computer host for receiving the signals transmitted from the transmitting unit, a learning controller for activating the receiving unit into a learning mode, and a frequency variation generating controller mounted on the electronic device for generating a unit frequency of the electronic device after being activated.

### BRIEF DESCRIPTION OF THE DRAWINGS

The above objects and advantages of the present invention will be become more apparent by describing in detail exemplary embodiments thereof with reference to the attached drawings in which:
Figure 1 shows an embodiment of signal transceiving structure;
Figure 2 shows the composition of an identification frequency of an electronic product; and
Figure 3 shows the process flow of a method for preventing frequency interference from electronic devices.

### DETAILED DESCRIPTION OF THE INVENTION

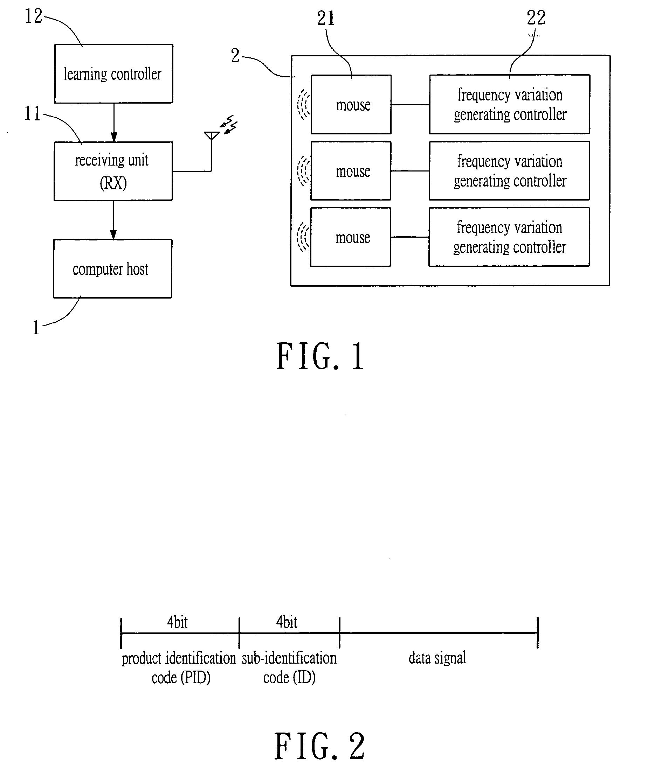

Referring to Figure 1, the structure of a signal transmission as illustrated comprises a receiving unit 11 connected to a computer host 1, a learning control 12, various electronic input products 2 operative to transmit wireless signals, and a frequency variation generating controller 22 installed in each electronic input product 2. The electronic products 2 may be a mouse 21 as in this preferred embodiment or other electronic input products such as keyboards, remote controls and audio input devices.

The receiving unit 11 is a radio-frequency (RF) transceiver which allows the electronic input products 2 to transmit signals carrying data or command in one-way and through single channel to the computer host 1.

The learning controller 12 is installed in or connected to the receiving unit 11. Once the learning controller 12 is activated, the receiving unit 1 will enter into a learning mode to make the computer host 1 start frequency scanning. That is, there will be scanned from one to N's frequency to recognize different frequency of the signals transmitted from each electronic input product 2. Each unique identification frequency independently generated for each individual electronic product 2 is stored to an Erasable Programmable Read Only Memory (EPROM) in the computer host 1. Therefore, the computer host 1 can identify the signals received from the receiving unit 11 belonging to which electronic input product 2 by comparing the frequency.

In this preferred embodiment, the learning controller 12 is a learning key which is a key connected to or installed in the receiving unit 11. A user can thus activate the learning mode by easily pushing the key.

In other embodiments, the learning controller 12 can be a network bridge software controller. By executing the software controller, the learning mode is activated.

Each electronic input product 2 includes a RF transmitter to transmit wireless signals to the receiving unit 11 after users input data or command.

A unique identification, such that the signal composed of input data or command can be transmitted with the specific identification frequency. The method of generating individual identification frequency includes installing the frequency variation generating controller 22 in each electronic product 2. In this preferred embodiment, the frequency variation generating controller 22 is a controlling key installed on each electronic input product 2. When the user press or operate the controlling key on the electronic product 2, the individual identification frequency is generated by fuzzy. The generated identification frequency is received by the receiving unit 11 and stored in the computer host 1 for future identification of an incoming signal.

The signal identification frequency includes product identification codes (Pill) and sub-identification code (ID) for receiving a sequence of signals composed of electronically operated input data and command. As shown in Figure 2, the product identification codes are used to identify a specific type of products. Therefore, a batch of products such as mouse 21 produced from the same factory may have the common product identification code. As mentioned, the sub-identification code is individually generated by the frequency variation generating controller 22 built in the specific electronic product 2. Therefore, the sub-identification code can be used to identify the same type of electronic products 2. The product identification code and the sub-identification code are composed of several bits such as 4 bits, 5 bits, 6 bits or other number of bits. Thereby, a number such as 24, 25, 26 of sequence codes may be generated to provide one product identification code and one sub-identification code for each individual electronic product 2. The product identification code and the sub-identification code results in a unique frequency for the signal transmitted from each individual electronic input device 2.

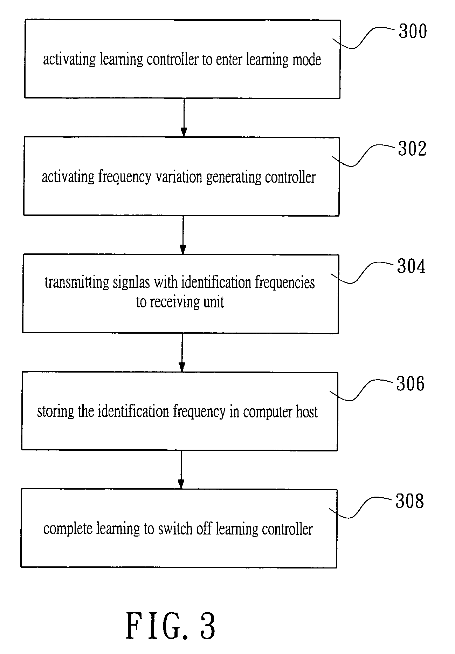

Figure 3 illustrates a process flow for preventing interference of transmission frequency from the electronic products as discussed above.

In step 300, the learning controller 12 is activated to enter the learning mode.

In step 302, the frequency variation generating control 22 is activated. The computer host 1 starts frequency scanning.

In step 304, the electronic products 2 transmit signals with the identification frequencies generated by fuzzy to the receiving unit 11.

In step 306, the receiving unit 11 receives a sequence of signals transmitted from the electronic product to send to the computer host 1 so that each unique identification frequency independently generated for each individual electronic product 2 is stored to the EPROM of the computer host 1.

In step 308, complete the learning of the transmission frequency of each electronic input product 2. Switch off the learning controller 12 and the frequency variation generating controller 22.

After a specific transmission frequency corresponding to each electronic input product 2 has been set up, when one electronic input product 2 transmits a sequence of signals including the data and command signals in the specific transmission frequency to the receiving unit 11 of the computer host 1, the computer host 1 can then clearly identify these signals are transmitted by which electronic input product 2 according to the pre-learning transmission frequencies stored in the EPROM of the computer host 1. As such, the interference of the transmission frequency from the electronic input devices can be prevented.

The above identifying procedure first includes the PID identification of the electronic input products 2. Because each type of the electronic input products 2, such as mouse, keyboard, remote control or audio input device, has different PID, it can be used to identify that the signals are transmitted by which type of the electronic input products 2. If the signals are transmitted from the same type of electronic input products 2, the ID identification is further required to decide which mouse, keyboard, remote control or audio input device transmits the signals, for example. As such, when a plurality of different electronic input products 2, according to the present invention, the interference of the transmission frequency from the electronic input devices can be prevented.

While the present invention has been particularly shown and described with reference to preferred embodiments thereof, it will be understood by those of ordinary skill in the art the various changes in form and details may be made therein without departing from the spirit and scope of the present invention as defined by the appended claims.

## Claims

1. A device for preventing interference of transmission frequency from electronic devices, comprising:
a transmitting unit installed in each electronic device to transmit wireless signals;
a receiving unit connected to a computer host for receiving the signals transmitted from the transmitting unit;
a learning controller for activating the receiving unit into a learning mode; and
a frequency variation generating controller installed in each electronic device for generating a unique frequency of the electronic device stored in the computer host after the learning controller is activated.

2. The device of Claim 1, wherein the receiving unit is a radio-frequency (RF) receiver for receiving the signals in one-way and single-channel transmission.

3. The device of Claim 1, wherein the learning controller is a learning key installed on the receiving unit.

4. The device of Claim 1, wherein the learning controller is a network bridge software controller installed in the receiving unit.

5. The device of Claim 1, wherein the electronic device is a mouse, a keyboard, a remote controller or an audio input device.

6. The device of Claim 1, wherein the frequency variation generation controller is a controlling key.

7. A method for preventing interference of transmission frequency from electronic devices, each electronic device including a frequency variation generating controller, being communicated with a computer host including a receiving unit and a learning controller furnished on the receiving unit, the method comprising:
activating a learning procedure to pre-store a specific transmission frequency corresponding to each electronic device in the computer host;
transmitting a sequence of signals in a predetermined transmission frequency from a specific electronic device;
receiving the signals by the receiving unit to transmit to the computer host;
comparing the predetermined transmission frequency of the signal with each pre-stored specific transmission frequency in the computer host; and
deciding the signals transmitted from the specific electronic device.
